# FASCICULE DE BREVET EUROPEEN

(11) **EP 0 466 564 B1**
(45) Date de publication et mention de la délivrance du brevet: **07.09.1994**
(21) Numéro de dépôt: 91401872.6
(22) Date de dépôt: 05.07.1991
(51) Int. Cl.: F16J 13/00

(54) **Récipient démontable, pouvant supporter une pression interne**
Auseinandernehmbarer Behälter, der für einen internen Druck ausgelegt ist
Dismountable vessel supporting an internal pressure

(30) Priorité: 09.07.1990 FR 9008676
(43) Date de publication de la demande: 15.01.1992
(73) Titulaire: TECNOMA, 51206 Epernay (FR)
(72) Inventeur: Ballu, Patrick Jean-Marie, F-51100 Reims (FR)
(74) Mandataire: Aron, Georges

(56) Documents cités:
- EP-A- 0 156 669
- EP-A- 0 325 518
- DE-B- 1 297 424
- DE-U- 7 824 088
- FR-A- 1 366 745

## Description

La présente invention est relative à un récipient démontable en deux éléments, destiné à supporter une pression interne et comprenant un premier élément dont une partie cylindrique pénètre dans une partie cylindrique d'un second élément, et un joint d'étanchéité intercalé entre ces deux parties cylindriques.

Lorsque la ligne de jonction des deux éléments d'un récipient résistant à la pression et en deux parties présente une longueur importante, on a souvent recours à une liaison par flasques parallèles entre lesquels est interposé un joint. Cette disposition est sûre, mais lourde et encombrante, et les opérations de montage et démontage du récipient sont longues. Cela est en particulier le cas lorsque le récipient, qui est par exemple cylindrique avec deux fonds éventuellement bombés, est constitué de deux éléments réunis dans la partie de diamètre maximal, pour faciliter les inspections et nettoyages par exemple. Un des deux éléments au moins peut présenter des orifices obturables de plus petit diamètre pour le remplissage ou le vidage, l'obturation de ces orifices présente en général des problèmes moins aigus.

Les récipients démontables qui font appel à la pénétration d'une partie cylindrique (partie mâle) dans une autre (partie femelle) sont moins lourds et moins encombrants, grâce à l'absence des flasques. Ils présentent surtout l'avantage de permettre des montages et démontages rapides. En revanche, ils présentent le risque, inhérent à un démontage rapide, que ce démontage ait lieu alors que le récipient est encore sous pression, ce qui peut provoquer des accidents.

On a proposé dans le document EP-A-0325518, pour éviter ce risque, de prévoir que la surface extérieure de l'élément femelle porte des moyens d'accrochage aptes à coopérer avec des moyens d'accrochage prévus sur un organe de liaison solidaire en translation axiale de l'élément mâle, et que l'épaisseur de l'élément femelle est calculée pour que, lorsque ladite pression interne déterminée est appliquée au récipient, celui-ci se déforme pour rendre impossible l'actionnement des moyens d'accrochage en vue de l'ouverture du récipient. Cette solution intéressante exige que la pression d'utilisation et les caractéristiques de déformabilité du matériau soient connus et restent dans des limites déterminées.

On avait également proposé, dans les brevets US-3.990.605 et US-4.444.331, un dispositif de blocage connecté avec un dispositif de mise à l'atmosphère. Dans les deux cas, il s'agit d'une valve de mise à l'atmosphère dont la partie externe, qui forme un chapeau, s'enlève par dévissage. Quand cette partie externe est vissée, elle empêche le dévissage du couvercle grâce à un oeillet, ou une fourchette, qui est lié au couvercle, et vient buter sur cette partie externe. Il faut donc dévisser cette pièce, ce qui entraîne la mise à l'atmosphère du récipient, pour pouvoir tourner le couvercle.

Ces dispositifs font appel à une pièce démontable, qu'il faut enlever à chaque ouverture du récipient. Il est possible que cette pièce soit remplacée par un moyen d'obturation de remplacement, imaginé par l'utilisateur, et qui ne remplit pas la fonction de sécurité de façon convenable. Cela peut arriver parce que la pièce démontable est détériorée, ou soit parce que l'utilisateur veut éviter d'avoir à opérer le démontage à chaque ouverture.

On a proposé aussi, dans EP-A-0156.669 et dans DE-B-1.297.424, des récipients munis de dispositifs de blocage associés à un moyen de mise à l'atmosphère conformément au préambule de la revendication 1. Une valve de mise à l'atmosphère comporte une pièce mobile liée à un clapet, et un organe de verrouillage mobile comporte une surface qui se déplace perpendiculairement à l'axe du clapet et comporte une cavité apte à recevoir la pièce mobile. Quand la pièce mobile pénètre dans la cavité, le clapet se ferme, permettant la mise en pression, et en même temps l'organe de verrouillage est immobilisé par la pièce mobile dans une position de blocage du couvercle. Quand c'est une autre partie de la surface mobile qui est en face de la pièce mobile, le clapet est maintenu ouvert, et en même temps l'organe de verrouillage peut se déplacer.

La présence de cet organe de verrouillage entraîne une complication, et donc une augmentation du coût.

La présente invention a pour but de fournir un récipient pourvu d'un dispositif de sécurité associant le blocage du couvercle et la mise à l'atmosphère, qui soit plus simple de fonctionnement et de réalisation moins coûteuse que ceux de l'art antérieur.

L'invention fournit en conséquence un récipient comprenant un corps qui comporte une première partie cylindrique, et un couvercle qui comporte une seconde partie cylindrique, de diamètre intérieur supérieur au diamètre extérieur de la première partie cylindrique du corps, le couvercle étant mis en place en enfonçant la seconde partie cylindrique sur la première, par vissage ou autrement, le récipient comprenant en outre un dispositif de sécurité qui comporte :
- une pièce mobile solidaire d'un clapet qui est maintenu fermé en contact étanche avec un moyen d'étanchéité par l'action de la pression à l'intérieur du récipient, et qui peut être maintenu ouvert sous l'effet d'une poussée venue de l'extérieur,
- une surface extérieure mobile perpendiculairement au clapet et apte à exercer ladite poussée sur la pièce mobile pour maintenir le clapet ouvert,
- une cavité prévue dans ladite surface extérieure, et dans laquelle peut pénétrer la pièce mobile quand elle est en alignement avec ladite cavité, le clapet pouvant alors passer dans la position de fermeture,
   caractérisé en ce que ladite surface extérieure est constituée par le couvercle lui-même ou ladite seconde partie cylindrique, et la cavité traverse la paroi dudit couvercle ou de ladite partie cylindrique.

Suivant une réalisation avantageuse, le moyen d'étanchéité comprend une membrane en forme de disque annulaire, dont le bord extérieur est fixé de façon étanche sur la paroi d'un passage traversant la paroi du récipient, ce passage contenant la pièce mobile et le clapet, le bord intérieur de la membrane constituant une bague d'étanchéité mobile avec jeu le long de la pièce mobile et capable de venir, par une face, en contact étanche avec le clapet ou en appui sur au moins une butée, cette bague étant poussée en direction du clapet ou de la butée par un moyen élastique qui prend appui sur le corps du récipient.

L'effet de ce moyen élastique est de pousser, par l'intermédiaire de la bague d'étanchéité, la pièce mobile vers l'intérieur du récipient, quand la pression intérieure est faible, afin de faciliter la mise en place ou l'enlèvement du couvercle.

Avantageusement, la membrane est élastique et constitue en elle-même ledit moyen élastique.

Suivant une réalisation intéressante, le récipient comprend un moyen élastique additionnel qui maintient un contact étanche entre le moyen d'étanchéité et le clapet tant qu'une force antagoniste résultant d'une action volontaire sur la pièce mobile, d'une mise en place incorrecte du couvercle, ou d'une surpression interne, ne surmonte pas la force dudit moyen élastique additionnel.

Le clapet est ainsi maintenu fermé de façon sûre lorsque le récipient est ouvert, ce qui facilite une montée en pression ultérieure.

L'invention va maintenant être décrite de façon plus détaillée à l'aide d'un exemple pratique de réalisation illustré à l'aide des dessins, parmi lesquels :

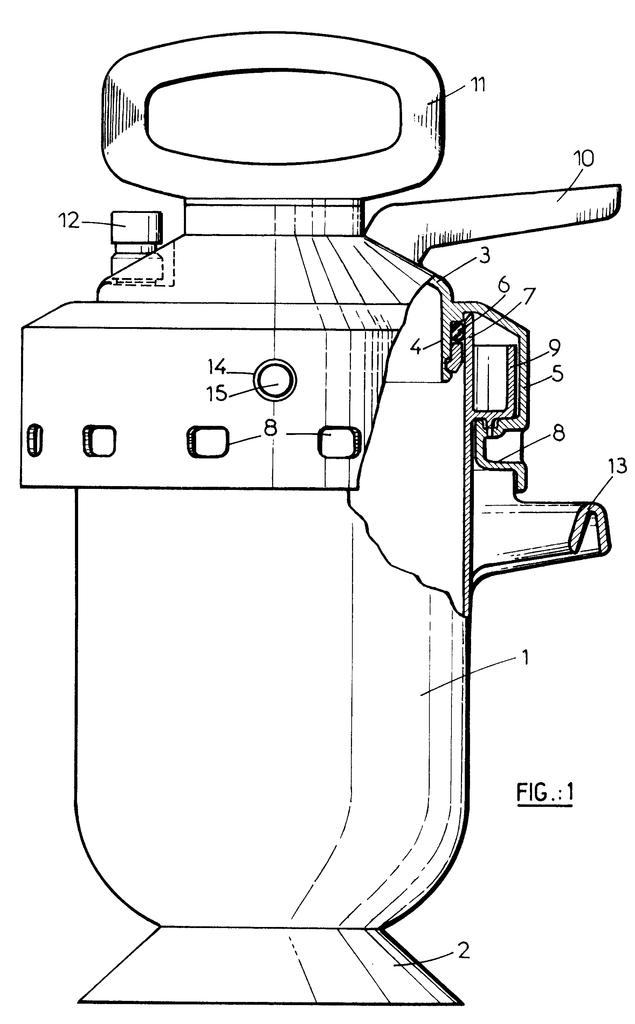

Figure 1 est une vue d'ensemble d'un récipient selon l'invention.

Figures 2, 3 et 4 montrent en coupe le dispositif de verrouillage respectivement en situation d'ouverture du récipient, de mise à l'atmosphère et de maintien sous pression.

Le dispositif décrit aux figures est un réservoir d'appareil de pulvérisation portable, muni d'une pompe à actionnement manuel. Il comprend un corps 1, muni d'un pied 2, et de forme générale cylindrique à axe vertical. Un couvercle 3 comporte, à sa partie inférieure, une jupe intérieure 4 et une jupe extérieure 5. La jupe intérieure vient à l'intérieur du corps, l'étanchéité étant assurée par un joint 6. La jupe extérieure entoure le bord supérieur 7 du corps, à une certaine distance de celui-ci. Elle porte des saillants 8 dirigés radialement vers l'intérieur, et qui s'engagent sous des saillants 9 dirigés radialement vers l'extérieur et portés par le corps. L'ensemble de ces saillants constitue un ensemble à verrouillage rapide, du type à baïonnette.

Le couvercle porte encore une poignée latérale 10, destinée à faciliter le verrouillage de l'ensemble des saillants, par une rotation du couvercle autour de l'axe vertical. Au centre du couvercle, on a représenté une poignée 11, qui commande une pompe intérieure, destinée à mettre en pression l'intérieur du récipient, une fois qu'il est fermé. La référence 12 désigne une soupape. On a représenté également une poignée latérale 13, solidaire du corps, et qui sert à immobiliser celui-ci pendant qu'on met en oeuvre l'ensemble à verrouillage rapide.

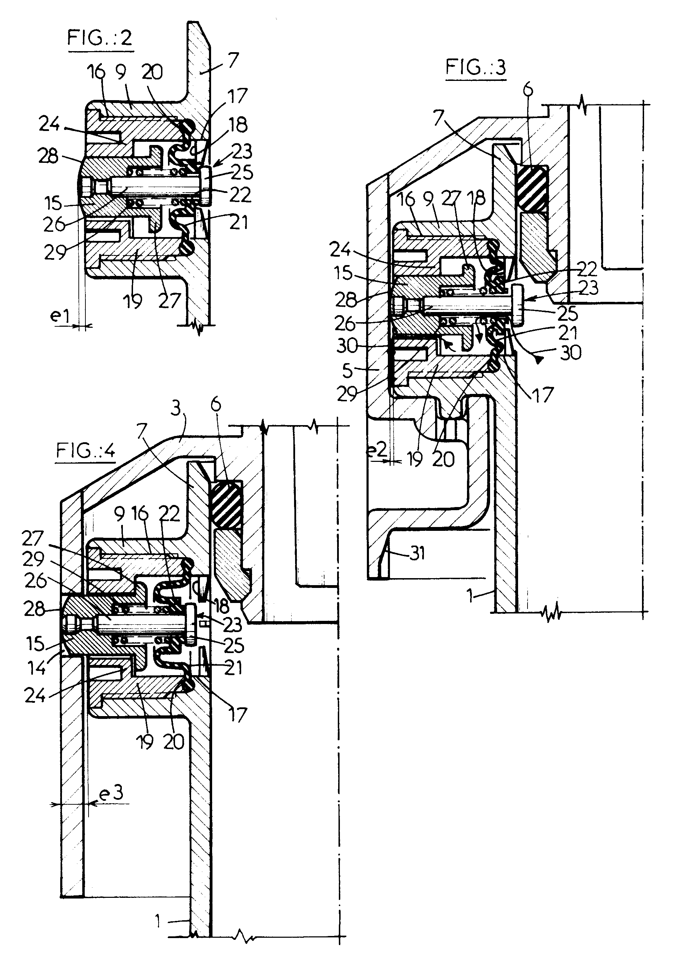

La jupe extérieure présente un orifice latéral circulaire 14, à travers lequel passe, en position de fermeture, le bouton de commande 15 d'un dispositif à clapet qui va maintenant être décrit de façon plus détaillée en s'aidant des figures 2 à 4.

Le mécanisme de sécurité, décrit à ces figures, est logé, dans son ensemble, à l'intérieur d'un des saillants 9 prévus sur la face extérieure du corps, à proximité de son bord supérieur. Plus précisément, le mécanisme de sécurité est placé dans un logement radial, qui traverse la paroi du saillant 9 et comporte une partie élargie 16, filetée, du côté de la paroi extérieure du saillant 9, et une partie plus étroite 17 située au droit de l'ensemble du bord supérieur 7 du corps. Ces deux parties sont reliées par un épaulement 18, radial par rapport au logement.

Une pièce de maintien 19 est vissée dans la partie élargie 16, et maintient, entre son extrémité 20 et l'épaulement 18, le bord externe d'une membrane élastique 21, en forme d'anneau à peu près plan. Le bord interne de la membrane 21 présente une surépaisseur, et constitue une bague d'étanchéité 22.

Le clapet 23 est une pièce de forme générale à peu près cylindrique, qui peut se déplacer selon l'axe du logement radial en étant guidée d'un côté par une collerette interne 24 de la pièce de maintien, et de l'autre côté par la paroi de la partie plus étroite 17 de logement. Ce clapet comprend une partie élargie 25 en forme de disque susceptible de venir en appui sur la face de la membrane 21 qui est tournée vers l'intérieur du corps 1. Cette partie élargie se prolonge par une tige 26, qui passe, avec jeu, à travers l'ouverture centrale de la membrane, et porte le bouton de commande 15, qui fait saillie vers l'extérieur. Une nervure 27, à la base du bouton de commande, vient en appui sur la collerette interne 24 de la pièce de maintien, pour empêcher la sortie du clapet vers l'extérieur.

La face extérieure du bouton de commande 15 présente un bord arrondi 28 pour une raison qu'on exposera plus loin.

Un ressort hélicoïdal 29 entoure la tige 26 et prend appui d'une part sur le bouton de commande 15, et d'autre part, sur la bague d'étanchéité 22, et tend à plaquer cette dernière contre la surface de la saillie 25 du clapet, pour assurer l'étanchéité.

La figure 2 montre la situation des pièces du mécanisme de sécurité, dans la situation où le couvercle 3 est enlevé. Le ressort 29, agissant entre la face extérieure de la bague d'étanchéité 22 et la nervure 27, maintient la partie élargie 25 du clapet contre la face intérieure de ladite bague d'étanchéité. L'élasticité propre de la membrane 21 la maintient en appui sur l'épaulement 18. Il en résulte que le clapet 23 occupe une position où le bouton de commande 15 fait saillie vers l'extérieur du saillant 9 d'une faible distance e1, qui n'est que très peu supérieure à la hauteur de la partie biseautée 28.

La figure 3 montre la situation alors que le couvercle 3 a été simplement posé sur le corps 1, sans être verrouillé. La jupe extérieure 5, guidée par l'ensemble des saillants 8, 9, pousse le bouton de verrouillage vers l'intérieur, si bien qu'il ne fait plus saillie que d'une distance e2, qui correspond au jeu entre la jupe 5 et le saillant 9. Du fait que le doigt de verrouillage est repoussé vers l'intérieur, la partie élargie 25 du clapet n'est plus en contact avec la bague d'étanchéité 22 qui est retenue par l'épaulement 18, si bien que le fluide contenu à l'intérieur du corps peut librement s'échapper, selon les flèches 30.

Le bord arrondi 28 du bouton 15 a permis la mise en place du couvercle 3 sans qu'on soit gêné par le bouton 15. Cette mise en place est encore facilitée par la présence d'un bord incliné 31 sur la jupe extérieure 5.

Pour passer de la situation de la figure 3 à celle de la figure 4, on a fait tourner le couvercle 3 autour de l'axe, jusqu'à ce que le trou 14 vienne en regard du bouton de commande 15. Ce dernier a pu alors se déplacer vers l'extérieur, sous l'action du ressort 29, et reprendre, par conséquent, la même position que celle qu'on voit à la figure 2, c'est-à-dire que l'étanchéité est assurée au niveau du clapet.

pour ouvrir le récipient, il faut tout d'abord appuyer sur l'extrémité du bouton de commande 15, de façon à séparer le clapet de la membrane. L'air comprimé contenu à l'intérieur du récipient peut alors s'échapper, et, quand la pression est descendue suffisamment bas, la membrane 21, par élasticité, revient en appui sur l'épaulement 18. A ce moment, il est possible de faire tourner le couvercle. En effet, le bouton de commande ne fait plus saillie que faiblement vers l'extérieur, si bien que le bord intérieur de l'orifice 14 peut agir sur son bord arrondi afin de le repousser vers l'intérieur. Il n'y a donc plus d'obstacle empêchant la rotation et l'ouverture du système de blocage à baïonnette constitué par les saillants 8 et 9.

Comme on le voit, l'appareillage est d'une grande simplicité, et assure néanmoins une grande sécurité.

On pourra observer qu'il serait possible à un opérateur pressé d'appuyer d'une main sur le bouton de commande, et de l'autre main, de tenter de débloquer le couvercle en le faisant tourner. Une telle opération n'est possible que si l'on ne doit exercer qu'une force modérée d'un côté sur le bouton de commande 15, c'est-à-dire si la pression est relativement basse, et de l'autre côté sur la poignée 10. Il est possible de la rendre difficile en disposant le mécanisme de sécurité dans une position telle qu'il soit difficile d'actionner simultanément la poignée 10. Dans le cas de produits dangereux, on peut prévoir une double sécurité sous la forme de deux systèmes à clapet du même genre, disposés dans des endroits écartés l'un de l'autre de la périphérie du récipient, de telle façon qu'il soit impossible à l'opérateur d'appuyer les deux boutons de commande 15 simultanément, tout en actionnant en même temps les poignées 10 et 13.

Comme l'étanchéité est également assurée par le joint 6 entre le corps et le couvercle, on a pu élever la pression interne du récipient. Cela a eu pour conséquence que la membrane 21 a été poussée vers l'extérieur, en opposition à son élasticité. La membrane 21 entraîne avec elle le clapet 23, si bien que son bouton de commande 15 pénètre dans le trou 14 de la jupe 5, et fait par conséquent saillie vers l'extérieur d'une distance e3, supérieure à e1. Cette distance est limitée par le fait que la nervure 27 vient en appui sur la collerette 24 de la pièce d'appui 19. Comme le trou 14 a une paroi cylindrique, au cas où l'on tenterait de déplacer le couvercle 3, cette paroi cylindrique empêcherait un tel mouvement en venant buter contre la partie également cylindrique du bouton 15.

Si la pression interne du récipient dépassait une valeur fixée à l'avance, elle déformerait encore la membrane 21, et la bague d'étanchéité 22 s'écarterait de la partie élargie 17, si bien que la pression retomberait dans les limite prévues.

Ainsi, le dispositif décrit constitue à lui seul une double sécurité : d'une part, il empêche l'ouverture du récipient tant que la pression interne est trop élevée, et d'autre part, il constitue une soupape de sécurité, empêchant les surpressions.

## Revendications

1. Récipient comprenant un corps (1) qui comporte une première partie cylindrique, et un couvercle (3) qui comporte une seconde partie cylindrique (5), de diamètre intérieur supérieur au diamètre extérieur de la première partie cylindrique du corps, le couvercle étant mis en place en enfonçant la seconde partie cylindrique sur la première, par vissage ou autrement, le récipient comprenant en outre un dispositif de sécurité qui comporte :
- une pièce mobile (15) solidaire d'un clapet (23) qui est maintenu fermé en contact étanche avec un moyen d'étanchéité (22) par l'action de la pression à l'intérieur du récipient, et qui peut être maintenu ouvert sous l'effet d'une poussée venue de l'extérieur,
- une surface extérieure faisant partie du couvercle lui-même, ledit couvercle incluant ladite seconde partie cylindrique (5), mobile perpendiculairement au clapet (23) et apte à exercer ladite poussée sur la pièce mobile pour maintenir le clapet ouvert,
- une cavité (14) prévue dans ladite surface extérieure, et dans laquelle peut pénétrer la pièce mobile quand elle est en alignement avec ladite cavité, le clapet (23) pouvant alors passer dans la position de fermeture,
caractérisé en ce que ladite surface extérieure est constituée par le couvercle (3) lui-même ou ladite seconde partie cylindrique (5), et la cavité (14) traverse la paroi dudit couvercle ou de ladite partie cylindrique.

2. Le récipient de la revendication 1, caractérisé en ce que le moyen d'étanchéité comprend une membrane (21) en forme de disque annulaire, dont le bord extérieur est fixé de façon étanche sur la paroi d'un passage (16, 17) traversant la paroi du récipient, ce passage contenant la pièce mobile (15, 26) et le clapet (23), le bord intérieur de la membrane constituant une bague d'étanchéité (22) mobile avec jeu le long de la pièce mobile et capable de venir, par une face, en contact étanche avec une surface du clapet (23) ou en appui sur au moins une butée (18), cette bague d'étanchéité étant poussée en direction du clapet ou de la butée par un moyen élastique qui prend appui sur le corps (1) du récipient.

3. Récipient selon la revendication 2, caractérisé en ce que la membrane (21) est élastique et constitue en elle-même ledit moyen élastique.

4. Récipient selon l'une des revendications 1 à 3, caractérisé en ce qu'il comprend un moyen élastique additionnel (29) qui maintient un contact étanche entre le moyen d'étanchéité (22) et le clapet (23) tant qu'une force antagoniste résultant d'une action volontaire, sur la pièce mobile (15), d'une mise en place incorrecte du couvercle (3) ou d'une surpression interne, ne surmonte pas la force dudit moyen élastique additionnel.

## Claims

1. Container comprising a body (1) which comprises a first cylindrical portion, and a lid (3) which comprises a second cylindrical portion, of an internal diameter greater than the external diameter of the first cylindrical portion of the body, the lid being fitted by pushing the second cylindrical portion over the first cylindrical portion, by screwing or otherwise, the container furthermore comprising a safety device which comprises :
- a movable piece (15) integral with a shutter (23) which is held closed in sealing contact with a sealing means (22) by the action of the pressure inside the container and which can be held open under the effect of a compressive force originating from outside,
- an outer surface forming part of the lid itself, said lid including said second cylindrical portion (5), which can move perpendicularly to the shutter (23) and is capable of exerting said compressive force on the movable piece in order to hold the shutter open,
- a cavity (14) provided in said outer surface and traversing the wall of said lid or of said cylindrical portion and into which can penetrate the movable piece when it is aligned with said cavity, it then being possible for the shutter (23) to move into the closing position,
characterized in that said outer surface consists of the lid (3) itself or said second cylindrical portion (5), and the cavity (14) traverses the wall of said lid or of said cylindrical portion.

2. The container of claim 1, characterized in that the sealing means comprises a diaphragm (21) in the form of an annular disk, the outer edge of which is fixed in sealing fashion to the wall of a passage (16, 17) traversing the wall of the container, this passage containing the movable piece (15, 26) and the shutter (23), the inner edge of the diaphragm constituting a sealing ring (22) which can move with play along the movable piece and is capable of coming into sealing contact, by way of one face, with a surface of the shutter (23) or of bearing against at least one abutment (18), this sealing ring being pushed toward the shutter or toward the abutment by an elastic means which bears on the body (1) of the container.

3. Container according to claim 2, characterized in that the diaphragm (21) is elastic and independently constitutes said elastic means.

4. Container according to one of claims 1 to 3, characterized in that it comprises an additional elastic means (29) which maintains a sealing contact between the sealing means (22) and the shutter (23) as long as a counterforce resulting from a deliberate action on the movable piece (15), from an incorrect fitting of the lid (3) or from an internal overpressure does not exceed the force of said additional elastic means.

## Patentansprüche

1. Behälter mit einem Körper (1), der einen ersten zylindrischen Abschnitt aufweist, und einem Deckel (3), der einen zweiten zylindrischen Abschnitt (5) mit einem Innendurchmesser aufweist, der größer als der Außendurchmesser des ersten zylindrischen Abschnittes des Körpers ist, wobei der Deckel dadurch positioniert wird, daß der zweite zylindrische Abschnitt durch Verschrauben oder in anderer Weise über den ersten zylindrischen Abschnitt bewegt wird, wobei der Behälter ferner eine Sicherheitsvorrichtung aufweist, die versehen ist mit:
- einem beweglichen Teil (15), das mit einem Ventilteil (23) fest verbunden ist, welches durch den Innendruck des Behälters in Dichtungsanlage mit einem Abdichtungsmittel (22) geschlossen gehalten wird und welches durch eine von außen kommende Kraft offengehalten werden kann,
- einer Außenfläche, die einen Teil des Deckels selbst bildet, wobei der Deckel den zweiten zylindrischen Abschnitt (5) enthält, der senkrecht zu dem Ventilteil (23) beweglich und in der Lage ist, die besagte Kraft auf das bewegliche Teil auszuüben, um das Ventilteil offenzuhalten,
- einem Hohlraum (14), der in der besagten Außenfläche vorgesehen ist und in den das bewegliche Teil eindringen kann, wenn es zu dem Hohlraum ausgerichtet ist, wobei das Ventilteil (23) dann in die Schließstellung bewegbar ist,
dadurch gekennzeichnet, daß die besagte Außenfläche von dem Deckel selbst oder dem zweiten zylindrischen Abschnitt (5) gebildet wird und der Hohlraum (14) durch die Wand des Deckels oder des besagten zylindrischen Abschnittes hindurch verläuft.

2. Behälter nach Anspruch 1, dadurch gekennzeichnet, daß das Abdichtungsmittel eine Membran (21) in Form einer ringförmigen Scheibe aufweist, deren Außenrand abgedichtet an der Wand eines die Behälterwand durchquerenden Kanals (16,17) festgelegt ist, wobei dieser Kanal das bewegliche Teil (15,26) und das Ventilteil (23) enthält, der Innenrand der Membran einen Dichtring (22) bildet, der mit Spiel entlang des beweglichen Teils bewegbar und in der Lage ist, mit einer Stirnfläche in Dichtungsanlage mit einer Fläche des Ventilteils (22) zu kommen oder sich an mindestens einen Anschlag (18) anzulegen, wobei dieser Dichtring in Richtung des Ventilteils oder des Anschlags von einem elastischen Mittel gedrückt wird, das an dem Körper (1) des Behälters anliegt.

3. Behälter nach Anspruch 2, dadurch gekennzeichnet, daß die Membran (21) elastisch ist und ihrerseits das elastische Mittel bildet.

4. Behälter nach einem der Ansprüche 1 bis 3, dadurch gekennzeichnet, daß er ein zusätzliches elastisches Mittel (29) aufweist, das eine Dichtungsanlage zwischen dem Abdichtungsmittel (22) und dem Ventilteil (23) aufrechterhält, solange eine Gegenkraft, die von einer willkürlichen Einwirkung auf das bewegliche Teil (15), einem fehlerhaften Sitz des Deckels (3) oder einem zu großen Innendruck herrührt, nicht die Kraft des zusätzlichen elastischen Mittels übersteigt.
